# FASCICULE DE BREVET EUROPEEN

(11) **EP 3 559 140 B1**
(45) Date de publication et mention de la délivrance du brevet: **28.08.2024**
(21) Numéro de dépôt: 17832536.1
(22) Date de dépôt: 22.12.2017
(51) Int. Cl.: C09J 123/08

(54) **UTILISATION D'UN COPOLYMÈRE ÉTHYLÈNE-ACRYLATE DE BUTYLE PARTICULIER DANS UNE COMPOSITION ADHÉSIVE THERMOFUSIBLE TRANSPARENTE À L'ÉTAT FONDU**
VERWENDUNG EINES BESTIMMTEN ETHYLENE-BUTYLACRYLAT-COPOLYMER IN EINER SCHMELZKLEBSTOFFZUSAMMENSETZUNG MIT TRANSPARENZ IN GESCHMOLZENEM ZUSTAND
USE OF A PARTICULAR ETHYLENE-BUTYL ACRYLATE COPOLYMER IN A HOT-MELT ADHESIVE COMPOSITION THAT IS TRANSPARENT IN THE MOLTEN STATE

(30) Priorité: 22.12.2016 FR 1663224
(43) Date de publication de la demande: 30.10.2019
(73) Titulaire: SK Geo Centric Co., Ltd., Jongno-gu Seoul (KR)
(72) Inventeur: BRUNEAU, Jean-Michel, 27140 Gisors (FR); LE NOBIN, Martine, 27410 Saint-Aubin le Guichard (FR); SORIANO, Jean-Philippe, 69005 Lyon (FR); QUETEL, Florence, 27170 Combon (FR)
(74) Mandataire: Bandpay & Greuter
(86) Numéro de dépôt international: PCT/FR2017/053821
(87) Numéro de publication internationale: WO 2018/115789

(56) Documents cités:
- EP-A1- 0 547 797
- WO-A1-02/060993

## Description

La présente invention concerne l'utilisation d'au moins un copolymère d'éthylène et d'acrylate de butyle, tel que défini ci-après, en tant qu'agent de cohésion, dans une composition adhésive thermofusible.

L'invention se rapporte également à une composition adhésive thermofusible comprenant au moins une résine adhésive hydrocarbonée, de préférence hydrogénée, et au moins un copolymère d'éthylène et d'acrylate tel que défini ci-après.

L'invention est aussi relative à l'utilisation de la composition adhésive thermofusible correspondante pour la fabrication d'un article manufacturé.

Les compositions adhésives thermofusibles ou colles thermofusibles (appelés hot melt adhesive compositions en langue anglaise) se trouvent à l'état solide, à température ambiante, le plus souvent sous forme oblongue, par exemple de bâtonnets, et sont prévues pour être fondues, à haute température, par exemple à une température allant de 130 à 180 ° C, afin d'être appliquées à l'état liquide sur un substrat. Après application, la prise d'adhésivité s'effectue rapidement lors du refroidissement des compositions à une température inférieure à leur point de fusion. Par exemple, le document EP0547797A1 divulgue une composition thermofusible comprenant un copolymère éthylène/acétate de vinyle, un copolymère éthylène/acrylate de butyle et une résine adhésive.

Ces compositions présentent donc les avantages d'être facilement manipulables et stockables, d'avoir une adhérence quasi-instantanée, c'est-à-dire un temps de prise rapide, de pouvoir être appliquées sur des substrats ou matériaux très variés et d'être sans solvant.

De telles compositions sont couramment utilisées dans de nombreux domaines techniques afin d'assembler une grande variété de substrats ou de matériaux entre eux pour confectionner des articles manufacturés.

A titre d'exemples, ces compositions peuvent être utilisées dans le domaine du packaging, notamment de l'emballage en carton ou en plastique, en particulier des emballages contenant des produits pharmaceutiques, des denrées alimentaires susceptibles d'être réfrigérées, à des températures situées entre -1°C et la température ambiante, ou congelées à des températures inférieures à -18°C, ou encore des produits issus d'un procédé industriel à une température d'environ 40°C.

De telles compositions peuvent aussi être utilisées dans le domaine de l'automobile, par exemple dans l'assemblage d'éléments se trouvant dans le tableau de bord d'un véhicule, dans la fabrication de reliures pour des livres, dans l'industrie du bois, notamment dans l'application de bandes de chant, dans l'étiquetage ou dans tout autre type de domaine.

Il en résulte que, quelque soit la température, les compositions adhésives thermofusibles doivent respecter un certain nombre de critères, notamment une prise d'adhésivité rapide, une bonne stabilité thermique, une bonne résistance mécanique et une tolérance accrue aux agressions extérieures, afin de répondre de manière satisfaisante aux exigences imposées dans ces différents domaines techniques.

Par exemple, dans le domaine du packaging, notamment de l'emballage en carton ou en plastique, les articles manufacturés, tels que les boîtes, les sacs, les barquettes ou les caisses, sont le plus souvent assemblés avec des équipements automatiques, par exemple un système de distribution de colles thermofusibles sur des chaînes d'emballage, où la vitesse et le taux de production des articles sont des paramètres importants à prendre en considération. Dès lors, le temps de prise des compositions adhésives thermofusibles distribuées doit être suffisamment rapide pour diminuer les risques de ralentissement au cours du cycle production.

Les compositions adhésives thermofusibles doivent également présenter une viscosité assez faible, de préférence inférieure à 1500 mPa.s, plus préférentiellement allant d'environ 700 à 1000 mPa.s, mesurée à une température de 170°C, afin de pouvoir être appliquées dans de faibles quantités et obtenir une bonne mouillabilité sur les substrats.

Les compositions adhésives thermofusibles doivent également offrir, à l'état fondu, i.e. sous forme liquide, une stabilité thermique accrue pendant plusieurs jours afin de minimiser les risques d'arrêt au cours du cycle de production et les coûts de maintenance des pièces de l'équipement.

En effet, les colles thermofusibles peuvent se gélifier ou être en partie carbonisées dans le réservoir du système de distribution ce qui peut notamment entraîner à la longue le colmatage des tuyaux d'alimentation, des buses et/ou des filtres du système. L'obturation de ces pièces peut ainsi conduire à un arrêt plus ou moins prolongé de la production ainsi qu'à une augmentation de la fréquence des opérations de vidange, et, par conséquent, des coûts de maintenance de l'équipement.

Les compositions adhésives thermofusibles sont habituellement transparentes ou translucides, incolores ou ayant une couleur paille, bronzée ou ambrée. Dans le cas du domaine de l'emballage, il est préférable de disposer d'une composition adhésive transparente à l'état fondu avec un minimum de coloration afin de pouvoir contrôler son évolution à chaud, i.e. sa stabilité thermique à l'état fondu, notamment pour déterminer la présence de gels et de traces de carbonisation, de manière à prévenir les inconvénients mentionnés ci-avant.

En d'autres termes, la transparence à l'état fondu de la composition adhésive permet aux utilisateurs de suivre plus facilement sa dégradation éventuelle au cours du cycle de production ce qui permet d'anticiper davantage les risques d'arrêt dans une chaîne de production et de diminuer les coûts de maintenance.

La transparence de ce type de composition adhésive peut dépendre des composants employés. Les compositions adhésives thermofusibles comprennent majoritairement au moins une résine adhésive (encore appelée résine tackifiante) et au moins un polymère ou copolymère différent de la résine, et, minoritairement, au moins une cire et au moins un antioxydant.

Les résines adhésives ont pour rôle d'augmenter la pégosité (c'est-à-dire le pouvoir collant ou d'adhérence) d'une composition adhésive thermofusible à l'état fondu. Ces résines sont généralement des composés ayant un poids moléculaire faible avec une température de transition vitreuse élevée. Les résines adhésives utilisées peuvent être choisies dans le groupe constitué par les colophanes et leurs dérivés, les terpènes et les terpènes modifiés (tels que décrits dans le brevet EP 0 300158 B1), les résines aliphatiques, cycloaliphatiques et aromatiques telles que des résines aliphatiques en C5, des résines aromatiques en C9, des résines aliphatiques/aromatiques en C5/C9 et des résines hydrocarbonées hydrogénées.

Les résines hydrocarbonées hydrogénées sont particulièrement préférées dans le domaine de l'emballage car elles contribuent à la transparence et la minimisation de la coloration des compositions adhésives thermofusibles.

Les polymères ou copolymères, différents des résines adhésives décrites précédemment, ont pour rôle d'apporter de la cohésion à la composition adhésive thermofusible à l'état fondu, c'est-à-dire de permettre à la composition de résister à un décollement en fonction de la contrainte appliquée (par exemple une contrainte de traction ou de cisaillement) que ce soit à température ambiante ou à des températures plus élevées.

En d'autres termes, les polymères ou copolymères, utilisés en tant qu'agent de cohésion, ont pour rôle d'améliorer la résistance au pelage ainsi que la résistance au cisaillement statique (i.e. la résistance au fluage) d'une composition adhésive thermofusible à l'état fondu.

Les copolymères d'éthylène d'acétate de vinyle (EVA) sont couramment utilisés en tant qu'agent de cohésion car ils présentent l'avantage d'être compatibles avec de nombreuses cires et résines adhésives ce qui leur assure d'être employés dans des domaines variés.

Cependant, les copolymères d'éthylène d'acétate de vinyle ont tendance à dégrader la stabilité thermique à l'état fondu des compositions adhésives thermofusibles. En particulier, de telles compositions ont tendance à se gélifier et se carboniser, totalement ou en partie, lorsqu'elles sont chauffées pendant plusieurs jours, ce qui entraîne les inconvénients décrits précédemment.

En variante, des copolymères d'éthylène et d'ester acrylique, tels que les copolymères d'éthylène et de (meth)acrylate d'alkyle, notamment le copolymère d'éthylène et d'acrylate de n-butyle, sont également utilisés en tant qu'agent de cohésion dans les compositions adhésives car ils présentent l'avantage d'améliorer leur stabilité thermique. Ces copolymères sont préparés dans un réacteur autoclave ou un réacteur tubulaire. Les copolymères d'éthylène et d'ester acrylique, obtenus dans un réacteur tubulaire, sont préférentiellement utilisés dans le domaine de l'emballage car ils disposent d'un point de fusion élevé. Par ailleurs, les copolymères d'éthylène et d'ester acrylique ont aussi une température de transition vitreuse basse leur permettant d'être flexibles à basse température ce qui facilite leur utilisation dans les emballages de produits congelés.

Cependant, les compositions adhésives thermofusibles à base de copolymères d'éthylène et d'acrylate de n-butyle, utilisés à l'heure actuelle, en particulier le copolymère d'éthylène contenant au moins 35% en poids d'acrylate de n-butyle, ont un aspect trouble à l'état fondu ce qui rend difficile le contrôle de leur stabilité thermique à chaud et accroit les risques d'arrêt de la production et des coûts de maintenance en raison de leur gélification ou leur carbonisation non anticipée.

De plus, les compositions adhésives thermofusibles à base de ce type de copolymères d'éthylène et d'acrylate de n-butyle présentent un point de trouble (appelé cloud point en langue anglaise) élevé, c'est-à-dire une température élevée à partir de laquelle un liquide se trouble en se refroidissant.

Par ailleurs, les polyoléfines, notamment le polyéthylène obtenu par catalyse métallocène, sont aussi fréquemment utilisées dans le domaine du packaging, en particulier de l'emballage, en tant qu'agent de cohésion, dans la préparation de compositions adhésives thermofusibles.

De telles compositions présentent généralement de bonnes propriétés, notamment en termes de stabilité thermique et de viscosité ainsi qu'une température de défaut d'adhérence par cisaillement élevée.

Cependant, les polyoléfines préparées par catalyse métallocène ne sont pas compatibles avec certaines résines adhésives, dont les résines colophanes, ce qui peut limiter leur utilisation.

Ainsi l'un des objectifs de la présente invention est de proposer un agent de cohésion ne présentant pas les inconvénients mentionnés ci-avant, qui est notamment capable de conduire à des compositions adhésives thermofusibles transparentes à l'état fondu de manière à pouvoir contrôler aisément leur stabilité thermique à chaud dans le but de minimiser ou maîtriser les risques liés à la gélification et la carbonisation des compositions.

En particulier, l'un des objectifs de la présente invention est de proposer un agent de cohésion susceptible d'améliorer la transparence à l'état fondu des compositions adhésives thermofusibles tout en leur conférant de bonnes propriétés.

Il existe donc un réel besoin de proposer des compositions adhésives thermofusibles qui sont non seulement transparentes à l'état fondu mais présentent également de bonnes propriétés, notamment en termes de stabilité thermique, de viscosité et de température de défaut d'adhérence par cisaillement.

La présente invention a donc notamment pour objet l'utilisation d'au moins un copolymère d'éthylène et d'acrylate de n-butyle ayant un indice de fluidité à l'état fondu strictement supérieur à 400 et strictement inférieur à 750 g/10 minutes, mesurée à une température de 190° C, et comprenant une teneur supérieure ou égale à 18% en poids et strictement inférieure à 33% en poids d'acrylate de n-butyle, calculée par rapport au poids total du copolymère, en tant qu'agent de cohésion, dans une composition adhésive thermofusible, la composition adhésive thermofusible ne comprenant pas de copolymère d'éthylène et de vinyl acétate.

L'utilisation d'un copolymère d'éthylène et d'acrylate de n-butyle selon l'invention permet d'obtenir des compositions adhésives thermofusibles qui ont l'avantage d'être transparentes à l'état fondu.

Ainsi la stabilité thermique des compositions adhésives thermofusibles, obtenues à partir d'un tel copolymère, est plus facile à contrôler, en particulier au niveau du suivi de la présence de gels ou des traces de carbonisation, ce qui permet de mieux anticiper les risques d'arrêt dans un cycle de production d'articles, manufacturés avec de telles compositions adhésives, et de diminuer les coûts de maintenance.

En d'autres termes, l'utilisation d'un tel copolymère permet de préparer des compositions adhésives thermofusibles transparentes à l'état fondu ce qui assure un suivi plus efficace de leur évolution à chaud au cours de leur application.

Plus précisément, le copolymère d'éthylène et d'acrylate de n-butyle selon l'invention permet de repérer ou suivre la dégradation de la composition adhésive thermofusible.

La transparence des compositions adhésives thermofusibles s'accompagne d'un minimum de coloration. Ainsi le copolymère d'éthylène et d' acrylate de n-butyle conforme à l'invention permet de conduire à des compositions transparentes et claires.

L'utilisation d'un copolymère d'éthylène et d'acrylate de n-butyle selon l'invention contribue donc au prolongement de la durée de vie des équipements automatiques utilisés pour distribuer les compositions adhésives thermofusibles.

En effet, le copolymère d'éthylène et d'acrylate de n-butyle selon l'invention permet d'éviter de laisser la composition adhésive thermofusible se gélifier trop longtemps ce qui permet de minimiser les risques d'obturation des différentes pièces d'un équipement automatique destiné à distribuer une telle composition, en particulier les filtres, les buses et/ou les tuyaux d'alimentation d'un tel équipement.

De plus, le copolymère d'éthylène et d'acrylate de n-butyle selon l'invention contribue à minimiser les risques de carbonisation de la composition adhésive thermofusible à force de la chauffer trop longtemps dans le réservoir ou le générateur d'un tel équipement.

En particulier, à la différence d'un copolymère d'éthylène et d'acrylate de n-butyle contenant au moins une teneur de 35% en poids d'acrylate de n-butyle, calculée par rapport au poids total du copolymère, l'utilisation d'un copolymère d'éthylène et d'acrylate de n-butyle, conforme à la présente invention, permet de préparer des compositions adhésives thermofusibles qui sont transparentes à l'état fondu, c'est-à-dire sous forme liquide.

De la même façon, l'utilisation d'un copolymère d'éthylène et d' acrylate de n-butyle, conforme à la présente invention, permet de préparer des compositions adhésives thermofusibles ayant un point de trouble faible, notamment inférieure à celui d'une composition adhésive thermofusible préparée avec un copolymère d'éthylène et d'acrylate de n-butyle contenant au moins une teneur de 35% en poids d'acrylate de n-butyle.

L'invention a également pour objet une composition adhésive thermofusible comprenant au moins une résine adhésive hydrocarbonée et au moins un copolymère d'éthylène et d'acrylate de n-butyle ayant un indice de fluidité à l'état fondu strictement supérieur à 400 et strictement inférieur à 750 g/10 minutes, mesurée à une température de 190° C, en particulier mesurée à une température de 190°C sous une charge de 2,16 kg, et comprenant une teneur supérieure ou égale à 18% en poids et strictement inférieure à 33% en poids d'acrylate de n-butyle, calculée par rapport au poids total du copolymère, la composition adhésive thermofusible ne comprenant pas de copolymère d'éthylène et de vinyl acétate.

La composition adhésive thermofusible selon l'invention est transparente à l'état fondu, c'est-à-dire sous forme liquide à une température supérieure à sa température de fusion, et présente des propriétés satisfaisantes à l'état fondu, notamment en termes de stabilité thermique, de viscosité et de température de défaut d'adhérence par cisaillement.

En particulier, la composition selon l'invention est stable thermiquement avec un minimum de coloration.

Par « stable thermiquement », on entend au sens de la présente invention, une composition qui ne conduit pas à la formation de gels ou ne présente pas de traces de carbonisation à l'état fondu pendant une période prolongée, par exemple de sept jours ou plus.

La stabilité thermique peut être aussi évaluée en mesurant l'évolution de la viscosité de la composition adhésive selon l'invention à l'état fondu pendant une période prolongée, par exemple de sept jours ou plus.

Par ailleurs, la composition adhésive thermofusible selon l'invention est non seulement stable thermiquement mais également très faiblement colorée à l'état fondu, i.e. sous forme liquide, pendant une période prolongée, par exemple une période de sept jours ou plus.

La coloration de la composition adhésive selon l'invention à l'état fondu peut être évaluée en mesurant l'indice de jaunissement (YI) pendant la même période de temps.

La composition adhésive thermofusible selon l'invention présente une viscosité comparable voire plus faible que celle obtenue avec une composition adhésive thermofusible contenant au moins une polyoléfine, notamment un polyéthylène, préparée par catalyse métallocène.

La viscosité de la composition adhésive thermofusible est mesurée à l'état fondu à l'aide d'un viscosimètre équipé d'un mobile SC4-27 à une température supérieure à la température de fusion de ladite composition, généralement à des températures supérieures à 130°C, de préférence allant de 130°C à 180°C.

En outre, la composition adhésive thermofusible selon l'invention présente une température de défaut d'adhérence par cisaillement plus élevée qu'une composition adhésive thermofusible contenant au moins une polyoléfine, notamment un polyéthylène, préparée par catalyse métallocène.

Par « température de défaut d'adhérence par cisaillement », on entend au sens de la présente invention la température à laquelle la composition n'est plus adhésive en mode cisaillement, c'est-à-dire lorsqu'une contrainte de cisaillement est appliquée à la composition à l'état fondu.

La composition selon l'invention présente également un point de trouble plus faible qu'une composition adhésive thermofusible contenant au moins un copolymère d'éthylène contenant au moins 35% en poids d'acrylate de n-butyle, calculée par rapport au poids total du copolymère.

La présente invention est également relative à l'utilisation de la composition adhésive thermofusible selon l'invention pour la fabrication d'un article manufacturé, de préférence la fabrication d'un emballage tel qu'un carton, une caisse, une barquette, un film d'emballage ou un sac.

Un autre objet de la présente invention concerne aussi un article manufacturé comprenant au moins une composition adhésive thermofusible telle que définie ci-avant.

D'autres caractéristiques et avantages de l'invention apparaîtront plus clairement à la lecture de la description et des exemples qui suivent.

Dans ce qui va suivre, et à moins d'une autre indication, les bornes d'un domaine de valeurs sont comprises dans ce domaine.

L'expression « au moins un » est équivalente à l'expression «un ou plusieurs ».

### Utilisation du copolymère

Comme indiqué précédemment, l'invention se rapporte à l'utilisation d'au moins un copolymère d'éthylène et d'acrylate de n-butyle ayant un indice de fluidité à l'état fondu strictement supérieur à 400 et strictement inférieur à 750 g/10 minutes, mesurée à une température de 190°C, en particulier mesurée à une température de 190°C sous une charge de 2,16kg, et comprenant une teneur supérieure ou égale à 18% en poids et moins de 33% en poids d'acrylate de n-butyle, calculée par rapport au poids total du copolymère, en tant qu'agent de cohésion, dans une composition adhésive thermofusible, la composition adhésive thermofusible ne comprenant pas de copolymère d'éthylène et de vinyl acétate.

Au sens de la présente invention, par agent de cohésion, on entend un composé capable d'apporter à la composition adhésive thermofusible à l'état fondu une résistance interne qui, lors de l'application d'une contrainte, s'oppose à son fractionnement (ou encore sa scission ou division).

Cette propriété est fonction des forces chimiques et physiques apportées par l'agent de cohésion.

Ainsi le copolymère d'éthylène et d'acrylate de n-butyle selon l'invention apporte une cohésion à la composition adhésive thermofusible à l'état fondu en lui procurant une résistance interne au décollement par rapport à la contrainte appliquée, par exemple une contrainte de traction ou une contrainte de cisaillement.

Le copolymère d'éthylène et d'acrylate de n-butyle conforme à la présente invention, est par exemple capable d'améliorer la résistance au pelage ainsi que la résistance au cisaillement statique (i.e. la résistance au fluage) de la composition adhésive thermofusible à l'état fondu.

Ainsi la cohésion peut être évaluée en mesurant la résistance au pelage et la résistance au cisaillement statique de la composition adhésive thermofusible.

La résistance au pelage est mesurée à l'aide d'un test de pelage qui consiste à tirer sur la composition adhésive, une fois collée à un substrat, et à mesurer la force nécessaire au décollage ainsi que l'énergie totale dépensée.

La résistance au cisaillement statique est évaluée en appliquant la composition adhésive thermofusible à l'état fondu entre deux substrats et en appliquant une contrainte de cisaillement donnée à l'un des substrats afin d'évaluer le glissement d'un substrat par rapport à l'autre.

La résistance au cisaillement statique de la composition adhésive thermofusible à l'état fondu est généralement mesurée selon la norme ASTM D4498-07.

La résistance au cisaillement statique est évaluée en mesurant la température de rupture à chaud en cisaillement (ou encore appelée température maximale supportée en cisaillement ou température de défaut d'adhérence par cisaillement).

De préférence, la cohésion de la composition adhésive thermofusible selon l'invention est évaluée en mesurant la température de rupture à chaud en cisaillement (température de défaut d'adhérence par cisaillement).

L'indice de fluidité à l'état fondu (appelé Melt Flow Index en langue anglaise) du copolymère correspond à la masse écoulée du copolymère à l'état fondu à travers une filière de forme oblongue, en particulier de forme cylindrique, pour un temps donné dans des conditions données de température.

L'indice de fluidité à l'état fondu du copolymère est mesuré conformément aux méthodes couramment utilisées pour caractériser les matériaux thermoplastiques permettant d'obtenir des informations sur l'extrudabilité ainsi que les possibilités de mise en forme du matériau telles que celles décrites dans les normes ASTM D1238 ou NF T51-06 à une température de 190°C en particulier mesurée à une température de 190°C sous une charge de 2,16kg.

De préférence, l'indice de fluidité à l'état fondu du copolymère selon l'invention varie de 410 à 740 g/10 min, mesurée à une température de 190°C (en particulier mesurée à une température de 190°C sous une charge de 2,16kg), préférentiellement de 420 à 720 g/10 min, et plus préférentiellement encore allant de 450 à 700 g/10 min.

Le copolymère d'éthylène et d'acrylate de n-butyle comprend une teneur allant de 18% en poids qui est strictement inférieure à 33% en poids d'acrylate de n-butyle, calculée par rapport au poids total du copolymère.

Préférentiellement, le copolymère d'éthylène et d'acrylate de n-butyle comprend une teneur allant de 18% à 32% en poids d'acrylate de n-butyle, calculée par rapport au poids total du copolymère.

Plus préférentiellement, le copolymère d'éthylène et d'acrylate de n-butyle comprend de 25 à 31% en poids d'acrylate de n-butyle par rapport au poids total du copolymère.

Encore préférentiellement, le copolymère d'éthylène et d'acrylate de n-butyle comprend de 26 à 29% en poids d'acrylate de n-butyle par rapport au poids total du copolymère.

Avantageusement, le copolymère d'éthylène et d'acrylate de n-butyle comprend 28% en poids d'acrylate de n-butyle par rapport au poids total du copolymère et un indice de fluidité à l'état fondu allant de 450 à 750g/10 minutes.

Le copolymère d'éthylène et d'acrylate de n-butyle présente un poids moléculaire allant généralement de 20000 à 50000 g/mol.

Le copolymère d'éthylène et d'acrylate de n-butyle conforme à la présente invention est obtenu par copolymérisation radicalaire sous haute pression dans un réacteur tubulaire.

La composition adhésive thermofusible de la présente invention ne comprend pas de c.opolymère d'éthylène et de vinyl acétate.

En d'autre terme, le copolymère d'éthylène et d'acrylate de n-butyle tel que défini ci-dessous n'est associé à un copolymère d'éthylène et de vinyl acétate.

En variante, l'invention concerne également l'utilisation d'au moins un copolymère d'éthylène et d'acrylate de n-butyle, tel que défini précédemment, pour la préparation d'une composition adhésive thermofusible.

Encore en variante, l'invention est relative à un procédé de préparation d'une composition adhésive thermofusible comportant au moins un copolymère d'éthylène et d'acrylate de n-butyle tel que défini précédemment.

### Composition adhésive thermofusible

Comme indiqué ci-avant, la composition adhésive thermofusible selon l'invention comprend :
au moins uné résine adhésive hydrocarbonée différente du copolymère d'éthylène et d'acrylate de n-butyle selon l'invention, et
au moins un copolymère d'éthylène et d'acrylate de n-butyle tel que défini précédemment,
la composition adhésive thermofusible ne comprenant pas de copolymère d'éthylène et de vinyl acétate.

Au sens de la présente invention, la résine est une molécule ou une macro-molécule, généralement un composé chimique ou un polymère ayant une faible masse moléculaire par rapport à des polymères usuels.

La résine adhésive hydrocarbonée présente généralement un poids moléculaire allant de 200 à 1000, de préférence allant de 200 à 900 g/mol.

La résine est dite adhésive car elle permet de conférer de la pégosité (appelé tack en langue anglaise) à la composition adhésive thermofusible de manière quasi-instantanée.

En d'autres termes, une résine adhésive confère un caractère collant à la composition quasiment dès sa mise en contact avec un substrat.

De préférence, la résine hydrocarbonée est hydrogénée.

La résine adhésive hydrocarbonée hydrogénée est de préférence choisie dans le groupe constitué par les résines hydrocarbonées hydrogénées aliphatiques, les résines hydrocarbonées hydrogénées cycloaliphatiques,
les résines hydrocarbonées aromatiques, partiellement ou
totalement, hydrogénées, les résines hydrocarbonées hydrogénées aliphatiques et/ou cycloaliphatiques modifiées aromatiques, les résines hydrocarbonées hydrogénées aromatiques modifiées aliphatiques ou cycloaliphatiques et leurs mélanges.

De préférence, la résine adhésive hydrocarbonée hydrogénée est choisie dans le groupe constitué par les résines hydrocarbonées hydrogénées cycloaliphatiques, les résines hydrocarbonées hydrogénées aliphatiques et cycloaliphatiques, les résines hydrocarbonées hydrogénées aromatiques modifiées aliphatiques et leurs mélanges.

Plus préférentiellement, la résine adhésive hydrocarbonée hydrogénée est choisie dans le groupe constitué par les résines hydrocarbonées hydrogénées cycloaliphatiques, les résines hydrocarbonées hydrogénées aliphatiques et cycloaliphatiques, le copolymère styrène/méthylstyrène/indène.

De préférence, la résine adhésive hydrocarbonée comporte un point de ramollissement anneau et bille (R&B) allant de 75 à 135°C et plus préférentiellement allant de 80 à 100°C.

Au sens de la présente invention, le point de ramollissement correspond à la température à laquelle la résine atteint un certain degré de ramollissement dans des conditions normalisées, en particulier selon la norme NF EN 1238.

La résine hydrocarbonée hydrogénée est de préférence choisie dans le groupe constitué par:
- les résines hydrocarbonées hydrogénées aromatiques modifiées aliphatiques ayant un faible poids moléculaire telles que celles vendues sous la dénomination commerciale Regalite ^{™} R1100 par la société Eastman,
- les résines hydrocarbonées hydrogénées cycloaliphatiques telles que celles vendues sous la dénomination commerciale Escorez 5380 par la société Exxon,
- les résines hydrocarbonées hydrogénées cycloaliphatiques/aliphatiques telles que celles vendues sous la dénomination commerciale Sukorez SU-500 par la société Kolon.

La résine hydrocarbonée hydrogénée peut être présente dans la composition adhésive thermofusible dans une teneur allant de 40 à 60% en poids et plus préférentiellement dans une teneur allant de 45 à 55% en poids, par rapport au poids total de la composition.

Le copolymère d'éthylène et d'acrylate de n-butyle peut être présent dans la composition adhésive thermofusible dans une teneur allant de 30 à 40% en poids, de préférence dans une teneur allant de 32 à 37% en poids, par rapport au poids total de la composition.

La composition adhésive thermofusible de la présente invention ne comprend pas de copolymère d'éthylène et de vinyl acétate.

La composition adhésive thermofusible peut comprendre en outre au moins une cire.

La cire est de préférence choisie dans le groupe constitué par les cires de paraffine, les cires de paraffine microcristalline, les cires de Fischer-Tropsch (i.e. des cires obtenues par un procédé Fischer-Tropsch faisant intervenir du monoxyde de carbone et de l'hydrogène), les cires Fischer-Tropsch oxydées, les cires hydrogénées de stéaramide.

De préférence, la cire est choisie dans le groupe constitué par les cires de paraffine, les cires de Fischer-Tropsch et leurs mélanges.

Plus préférentiellement, la cire est choisie dans le groupe constitué par les mélanges de cire de paraffine et de cires de Fischer-Tropsch.

La cire de paraffine présente un poids moléculaire faible et, par conséquent, une faible viscosité. Elle permet d'améliorer les propriétés de flexibilité et d'élongation de la composition adhésive.

Les cires de Fischer-Tropsch présentent un point de fusion élevées, une faible viscosité ainsi qu'une excellente dureté et stabilité thermique.

En particulier, la cire présente dans la composition adhésive thermofusible correspond à un mélange composé d'une cire de paraffine, vendue sous la dénomination Salsowax 6805, et d'une cire de Fischer-Tropsch vendue sous la dénomination Salsowax C105.

Les cires permettent d'améliorer le temps d'ouverture ainsi que le temps de fixation de la composition adhésive thermofusible à l'état fondu.

Au sens de la présente invention, le temps d'ouverture correspond au temps pendant lequel la composition est appliquée à l'état fondu et reste suffisamment dans cet état pour réaliser une liaison collante avec un second substrat destiné à recouvrir ladite composition.

Au sens de la présente invention, le temps de fixation correspond au temps pendant lequel une pression minimale de maintien est requise pour obtenir l'adhérence.

La cire peut être présente dans la composition adhésive thermofusible dans une teneur allant de 10 à 20% en poids, par rapport au poids total de la composition.

De préférence, la composition adhésive thermofusible comprend une cire de paraffine dans une teneur de 10% en poids et une cire de Fischer-Tropsch dans une teneur de 5% en poids, par rapport au poids total de la composition.

La composition adhésive thermofusible peut comprendre en outre au moins un stabilisant ou un antioxydant.

Au sens de la présente invention, l'agent stabilisant ou antioxydant permet de protéger la composition adhésive thermofusible des dégradations induites par l'action de l'oxygène qui sont provoquées par la chaleur ou la lumière.

De préférence, l'agent stabilisant ou antioxydant est choisi parmi les composés phénoliques tels que ceux vendus sous la dénomination Irganox par la société Ciba.

D'autres agents oxydants tels que des phosphites, des composés thioéther ou des amines secondaires permettent d'améliorer la stabilité vis-à-vis de la chaleur.

La composition adhésive thermofusible peut comprendre de 0,1 à 1% en poids d'agent stabilisant ou antioxydant par rapport au poids total de la composition.

La composition adhésive thermofusible peut également comprendre un agent plastifiant.

De préférence, la composition adhésive thermofusible comprend :
- au moins une résine adhésive hydrocarbonée hydrogénée, différente du copolymère d'éthylène et d'acrylate de n-butyle selon l'invention, choisie dans le groupe constitué par les résines hydrocarbonées hydrogénées aromatiques modifiées aliphatiques, les résines hydrocarbonées hydrogénées cycloaliphatiques et les résines hydrocarbonées hydrogénées cycloaliphatiques/aliphatiques, et
- au moins un copolymère d'éthylène et d'acrylate de n-butyle contenant une teneur allant de 18% à 32% en poids, de préférence une teneur allant de 25 à 31% en poids, encore de préférence une teneur allant de 26 à 29% en poids d'acrylate de n-butyle, calculée par rapport au poids total du copolymère et un indice de fluidité allant de 420 à 720 g/10 min, mesurée à une température de 190°C (en particulier mesurée à une température de 190°C sous une charge de 2,16kg), préférentiellement allant de 450 à 700 g/10 min.

Selon ce mode de réalisation, le copolymère d'éthylène et d'acrylate de n-butyle contient avantageusement 28% en poids d'acrylate de n-butyle, calculée par rapport au poids total du copolymère, et un indice de fluidité à l'état fondu allant de 450 à 700g/10 minutes mesurée à une température de 190°C, en particulier mesurée à une température de 190°C sous une charge de 2,16kg.

Conformément à ce mode de réalisation, la composition adhésive thermofusible comprend de préférence une résine adhésive hydrocarbonée hydrogénée dans une teneur allant de 40 à 60% en poids et plus préférentiellement dans une teneur allant de 45 à 55% en poids, par rapport au poids total de la composition et un copolymère d'éthylène et d'acrylate de n-butyle allant de 30 à 40% en poids, de préférence dans une teneur allant de 32 à 37% en poids, par rapport au poids total de la composition.

Conformément à ce mode de réalisation, la composition adhésive thermofusible peut comprendre en outre au moins un cire choisie dans le groupe constitué par les cires de paraffine, les cires de Fischer-Tropsch et leurs mélanges, et plus particulièrement leurs mélanges.

Avantageusement, la composition adhésive thermofusible comprend :
50% en poids d'une résine adhésive hydrocarbonée hydrogénée, par rapport au poids total de la composition adhésive,
35% en poids d'un copolymère d'éthylène et d'acrylate de n-butyle, par rapport au poids total de la composition adhésive, contenant une teneur de 28% en poids d'acrylate de n-butyle, calculée par rapport au poids total du copolymère, ayant un indice de fluidité à l'état fondu strictement supérieur à 400 et strictement inférieur à 750 g/10 min, de préférence allant de 450 à 700 g/10 min, mesurée à une température de 190°C, en particulier mesurée à une température de 190°C sous une charge de 2,16kg.

Selon ce mode de réalisation, la composition peut en outre comprendre une cire et un agent antioxydant.

La composition adhésive thermofusible selon l'invention présente une viscosité allant de 300 à 1500 mPa.s, de préférence allant de 700 à 1200 mPa.s, mesurée à 170°C à l'aide d'un viscosimètre équipé d'un mobile SC4-27 à une température supérieure à la température de fusion de ladite composition.

Comme indiqué précédemment, la stabilité thermique de la composition adhésive à l'état fondu peut être aussi évaluée en mesurant l'évolution de la viscosité de la composition adhésive selon l'invention à l'état fondu pendant une période prolongée, par exemple de sept jours ou plus.

Dans ce cas, par composition adhésive stable thermiquement, on entend notamment que moins de 10% de la viscosité de la composition à l'état fondu change après une durée de 72 heures, de préférence moins de 15% après une durée de 120 heures à une température de 170°C.

La composition adhésive thermofusible selon l'invention présente un point de ramollissement anneau et bille (R&B) supérieure à 80°C, de préférence allant de 90 à 100°C.

Le point de ramollissement est mesuré de la même façon que celle décrite précédemment.

La composition adhésive thermofusible présente une température maximale supportée en cisaillement (SAFT), ou température de défaut d'adhérence par cisaillement, supérieure à 65°C.

La température maximale supportée en cisaillement (SAFT) est mesurée conformément à la norme ASTM D4498-07.

### Utilisation de la composition

La composition adhésive thermofusible est utilisée dans la préparation d'un article manufacturé.

De préférence, la composition adhésive thermofusible selon l'invention est utilisée pour la préparation d'un emballage, en particulier un emballage en carton ou en plastique, la préparation d'une reliure, d'un étiquetage ou d'une bande de chant.

Préférentiellement, la composition adhésive thermofusible selon l'invention est utilisée pour la préparation d'un emballage, notamment un emballage en carton ou en plastique, en particulier un carton.

L'emballage en carton ou plastique peut être notamment une boîte, une caisse, un sac, une barquette ou un plateau.

### Article manufacturé

L'invention a de même pour objet un article manufacturé comprenant une composition adhésive telle que définie précédemment.

De préférence, l'article manufacturé est un emballage, en particulier un emballage en carton ou en plastique, une reliure, une bande à chant, un ruban ou une étiquette.

Plus préférentiellement, l'article manufacturé est un emballage, en particulier un emballage en carton ou en plastique, notamment en carton.

### Procédé de préparation d'un article manufacturé

La présente invention concerne également un procédé de préparation et/ou d'obturation d'un article manufacturé, tel que défini précédemment, comprenant au moins une étape d'application de la composition adhésive thermofusible, telle que définie précédemment, à l'état fondu, pour former et/ou obturer ledit article.

### Procédé de collage

L'invention a également trait à un procédé pour lier un substrat à un substrat similaire ou différent, comprenant l'application à au moins un substrat d'une composition adhésive thermofusible, telle que définie précédemment, à l'état fondu.

La composition adhésive thermofusible est ensuite laissée à refroidir. La prise d'adhésivité est quasi-instantanée.

De préférence, la composition adhésive est appliquée au substrat à une température supérieure à 100°C, de préférence allant de 100°C à 190°C.

Les exemples suivants servent à illustrer l'invention sans toutefois présenter un caractère limitatif.

### EXEMPLES

Les compositions adhésives thermofusibles testées, décrites ci-après, sont chauffées à une température de 170°C et atteignent au bout d'environ 30 minutes un état fondu, c'est-à-dire qu'elles se trouvent sous une forme liquide.

Lorsque les compositions atteignent leur état fondu, elles sont chacune manuellement secouées avec une tige de verre afin d'obtenir un mélange homogène.

Les compositions adhésives sont alors laissées à une température de 170°C pendant une durée d'une heure jusqu'à élimination complète des bulles d'air.

### Transparence

La transparence des compositions adhésives est déterminée par coulée de chaque composition (se trouvant sous la forme d'un mélange homogène) dans des boites de Pétri à une température de 170°C sur environ 5 mm d'épaisseur.

Sous la boîte de Pétri, est mis en place un mot, imprimé en noir, utilisé pour donner une évaluation visuelle de la transparence.

### Point de trouble

Le point de trouble (ou température trouble) apparaît lorsque les ingrédients deviennent incompatibles entre eux conférant ainsi un aspect trouble ou opaque à la composition adhésive. Cet aspect est causé par le développement de cristaux des ingrédients de la composition.

Le point trouble est mesuré selon le protocole suivant :
- chauffer la composition adhésive étudiée pour obtenir un état fondu à une température d'environ 170°C,
- tremper l'extrémité de mercure d'un thermomètre en verre dans le coeur de la composition adhésive à l'état fondu (i.e. dans la masse du mélange),
- retirer le thermomètre de la composition puis faire tourner le thermomètre lentement vers le bas en laissant la quantité supplémentaire de composition s'écouler dans la composition adhésive,

- observer la formation d'une opacité à la pointe du thermomètre, puis
- enregistrer la température dans le thermomètre lorsque la composition devient trouble.

### Viscosité

La viscosité des compositions adhésives thermofusibles à l'état fondu est mesurée avec un viscosimètre Brookfield Thermoset équipé d'un mobile SC4-27 selon la norme NF EN ISO 2555. Les mesures sont conduites à une température variant de 130 à 170°C.

### Température de rupture d'adhérence au cisaillement (SAFT)

La température de rupture d'adhérence au cisaillement (SAFT) consiste à tester la température de rupture à chaud en cisaillement des compositions adhésives thermofusibles. Elle est mesurée conformément à la norme ASTM D4498-07.

La composition adhésive est coulée sur enducteur chauffant plat dans une gamme de températures allant de 130 à 150°C de manière à former un film adhésif calibré sans bulle.

Les échantillons testés (ou assemblages) sont constitués de deux substrats en papier Kraft de dimension 100×25 mm2 collés entre eux avec le film adhésif sur une surface de dimension 25×25 mm2. Les deux substrats sont scellés à une température de 135°C sous une charge de 400 DaN pendant une durée de 5 secondes. Les échantillons forment donc un assemblage de deux substrats reliés entre eux par le film adhésif.

Les échantillons sont ensuite suspendus verticalement et chargés avec une masse de 500 ± 10g puis la température est augmentée progressivement à une vitesse contrôlée de 0,4°C / minute jusqu'à ce que l'assemblage cède.

L'équipement teste cinq échantillons simultanément et enregistre chaque température défaillante.

La température mesurée correspond donc à la température maximale supportée en cisaillement.

### Point de ramollissement

Le point de ramollissement mesuré par la méthode anneau-et bille (point de ramollissement anneau et bille (R&B)) correspond à la température à laquelle la composition adhésive atteint un certain degré de ramollissement dans des conditions normalisées.

Le point de ramollissement est mesuré selon la norme NF EN 1238.

### Polymère et copolymères testés

Les copolymères d'éthylène et d'acrylate de n-butyle, utilisés dans les compositions adhésives testées, de la série Lotryl, sont produits dans un réacteur tubulaire industriel appartenant à Arkema.

Le polyéthylène préparé par catalyse métallocène utilisé dans la composition adhésive testée est vendu sous la dénomination commerciale Affinity GA 1950 par la société Dow.

Les principales caractéristiques des copolymères d'éthylène et d'acrylate de n-butyle appartenant à la série Lotryl et le polyéthylène vendu sous la dénomination commerciale Affinity GA 1950 sont résumées dans le tableau suivant :
L'indice de fluidité à l'état fondu (appelé Melt Flow Index en langue anglaise, MFI) correspond à la masse écoulée du polymère ou copolymère à l'état fondu à travers une filière de forme oblongue normalisée au moyen d'un piston chargé (masse standard de 2160 grammes) pendant un temps donné dans des conditions données de température.

L'indice de fluidité à l'état fondu du polymère ou copolymère est mesuré à une température de 125°C dans une filière (capillaire) sous une charge de 325 grammes puis est extrapolé à une température de 190°C sous une charge de 2,16 kg.

**Tableau 1 : Caractéristiques des polymères et copolymères**

| | MFI (indice de fluidité) | Taux d'acrylate de n-butyle | Température de transition vitreuse (°C) |
|---|---|---|---|
| Conditions expérimentales | | Spectroscopie FTIR | DSC |
| Unités | g/10 min | % en poids | |
| | | | |
| Lotryl 35BA320T | 320 | 35% | -53 |
| Lotryl A | 460 | 28% | -53 |
| Lotryl B | 650 | 28% | -54 |
| Affinity GA 1950 | 500 | - | -57 |

### Tests de la transparence et du point de trouble

La sélection d'un couple constitué d'un copolymère d'éthylène et d'acrylate de n-butyle et d'une résine adhésive pour obtenir la meilleure composition adhésive possible consiste à déterminer la clarté et le point de trouble à l'état fondu des deux composés en mélange chacun étant dans une teneur de 50% en poids.

Le tableau 2 indique la transparence des compositions dans la boite de Pétri d'un mélange constitué de 50% en poids de copolymère et de 50% en poids de résine adhésive hydrocarbonée.

Les résines adhésives hydrocarbonées employées sont des résines hydrogénées vendues sous les dénominations commerciales Sukorez SU 100S, Sukorez SU 500, Regalite R1100, Escorez 5380 et Escorez 5400.

**Tableau 2 : aspect des mélanges copolymères/résines**

| Transparence d'un mélange de 50% en poids de copolymère et 50% en poids de résine adhésive à une température de 170°C | | | | | |
|---|---|---|---|---|---|
| Résine | Sukorez SU 100S | Sukorez SU 500 | Regalite R1100 | Escorez 5380 | Escorez 5400 |
| Lotryl 35BA320T | Trouble | Trouble | Trouble | Trouble | Trouble |
| Lotryl A | Transparent | Transparent | Transparent | Transparent | Transparent |
| Lotryl B | Transparent | Transparent | Transparent | Transparent | Transparent |

Le tableau 3 indique le point de trouble pour un mélange constitué de 50% en poids de copolymère et de 50% en poids de résine adhésive hydrocarbonée.

**Tableau 3 : point de trouble des mélanges copolymères/résines**

| Point de trouble d'un mélange de 50% en poids de copolymère et 50% en poids de résine adhésive | | | | | |
|---|---|---|---|---|---|
| Résine | Sukorez SU 100S | Sukorez SU 500 | Regalite R1100 | Escorez 5380 | Escorez 5400 |
| Lotryl 35BA320T | 120°C | 110°C | 104°C | 120°C | 115°C |
| Lotryl A | 80°C | 60°C | 50°C | 60°C | 90°C |
| Lotryl B | 75°C | 60°C | 50°C | 60°C | 80°C |

### Compositions adhésives thermofusibles

Les compositions adhésives thermofusibles testées présentent les partitions suivantes :
- 35% en poids d'un polymère ou d'un copolymère éthylène / acrylate de n-butyle,
- 50% en poids d'une résine adhésive hydrocarbonée hydrogénée,
- 14,80% en poids d'une cire, et
- 0,20% en poids d'un antioxydant.

Les pourcentages sont calculés par rapport au poids total de la composition adhésive.

Le polyéthylène préparé par métallocène (Affinity GA 1950) et les copolymères éthylène / acrylate de n-butyle de la série Lotryl A et Lotryl B ont été formulés avec les résines adhésives hydrocarbonées hydrogénées vendues sous les noms Regalite R1100, Sukorez SU 500 et Escorez 5380 conformément à la partition pondérale donnée ci-avant.

Les tableaux 4, 5 et 6 indiquent les viscosités en mPa.s, les points de ramollissement (°C) et la température maximale supportée en cisaillement (SAFT ou température de rupture d'adhérence au cisaillement en °C) pour les différentes formulations avec les résines adhésives Regalite R1100, Sukorez SU 500 et Escorez 5380.

Les résultats indiqués dans les tableaux 4, 5 et 6 font apparaître que les compositions adhésives thermofusibles formulées avec des copolymères d'éthylène et d'acrylate de n-butyle conformes à l'invention présentent des propriétés similaires aux compositions adhésives formulées avec le polyéthylène préparé par métallocène au niveau de la viscosité et du point de ramollissement.

Le tableau 4 montre que les compositions adhésives conformes à l'invention présente une température maximale supportée en cisaillement plus élevée qu'une composition adhésive identique formulée avec une polyoléfine préparée par métallocène.

**Tableau 4**

| | Température | Composition 1 | Composition 2 | Composition 3 |
|---|---|---|---|---|
| Lotryl A | | 35 | - | - |
| Lotryl B | | - | 35 | - |
| Affinity GA 1950 | | - | - | 35 |
| Regalite R1100 | | 50 | 50 | 50 |
| Cire | | 14,8 | 14,8 | 14,8 |
| Irganox 1010 | | 0,2 | 0,2 | 0,2 |
| Viscosité en mPa.s | 130°C | 3365 | 2490 | 3325 |
| | 170°C | 2420 | 1790 | 2263 |
| | 150°C | 1700 | 1350 | 1715 |
| | 160°C | 1271 | 1000 | 1285 |
| | 170°C | 1000 | 750 | 983 |
| Point de ramollissement (R&B) | | 93,6 | 95,4 | 94 |
| SAFT (°C) | | 67 | 68 | 61 |

**Tableau 5**

| | Température | Composition 4 | Composition 5 | Composition 6 |
|---|---|---|---|---|
| Lotryl A | | 35 | - | - |
| Lotryl B | | - | 35 | - |
| Affinity GA 1950 | | - | - | 35 |
| Sukorez SU 500 | | 50 | 50 | 50 |
| Cire | | 14,8 | 14,8 | 14,8 |
| Irganox 1010 | | 0,2 | 0,2 | 0,2 |
| Viscosité en mPa.s | 130°C | 3645 | 2535 | 3520 |
| | 170°C | 2605 | 1855 | 2540 |
| | 150°C | 1933 | 1396 | 1875 |
| | 160°C | 1454 | 1067 | 1425 |
| | 170°C | 1125 | 817 | 1117 |
| Point de ramollissement (R&B) | | 92,5 | 93,9 | 93,8 |

**Tableau 6**

| | Température | Composition 7 | Composition 8 | Composition 9 |
|---|---|---|---|---|
| Lotryl A | | 35 | - | - |
| Lotryl B | | - | 35 | - |
| Affinity GA 1950 | | - | - | 35 |
| Escorez 5380 | | 50 | 50 | 50 |
| Cire | | 14,8 | 14,8 | 14,8 |
| Irganox 1010 | | 0,2 | 0,2 | 0,2 |
| Viscosité en mPa.s | 130°C | 3010 | 2280 | 3205 |
| | 170°C | 2265 | 1670 | 3330 |
| | 150°C | 1696 | 1250 | 1725 |
| | 160°C | 1292 | 958 | 1317 |
| | 170°C | 1008 | 758 | 1021 |
| Point de ramollissement (R&B) | | 91,9 | 93,5 | 93,7 |

### Vieillissement des compositions adhésives

La stabilité thermique à l'état fondu des compositions adhésives conformes à l'invention et de la composition contenant le polyéthylène préparé par métallocène a été étudiée pendant une période de sept jours à une température de 170°C.

Sur une période de sept jours à une température de 170°C, aucune des compositions testées ne montre la formation de gels ou de traces de carbonisation. Toutes les compositions sont transparentes dès le départ (t=0) ainsi qu'au bout de sept jours (t = 7 jours).

La coloration des compositions adhésives a également été étudiée pendant cette période en mesurant leur indice de jaunissement.

Ces mesures d'indice sont retranscrites dans les tableaux suivants en nuance de couleur.

| | Composition 1 | Composition 2 | Composition 3 |
|---|---|---|---|
| T = 0 | Claire | Claire | Claire |
| T = 1 jour | Très légèrement jaune | Très légèrement jaune | Très légèrement jaune |
| T = 2 jours | Très légèrement jaune | Très légèrement jaune | Ambré |
| T = 7 jours | Ambré | Ambré | Ambré sombre |

Les résultats montrent que les compositions 1 et 2 selon l'invention restent claires plus longtemps que la composition 3 dont la coloration se dégrade plus rapidement.

Ces derniers résultats montrent que les copolymères d'éthylène et d'acrylate n-butyle selon l'invention confèrent des propriétés aux compositions adhésives thermofusibles plus avantageuses que celles conférées par une polyoléfine préparée par métallocène.

## Revendications

1. Utilisation d'au moins un copolymère d'éthylène et d'acrylate de n-butyle ayant un indice de fluidité à l'état fondu strictement supérieur à 400 et strictement inférieur à 750 g/10 minutes, mesurée à une température de 190°C sous une charge de 2,16 kg, et comprenant une teneur supérieure ou égale à 18% en poids et strictement inférieure à 33% en poids d'acrylate de n-butyle, calculée par rapport au poids total du copolymère, en tant qu'agent de cohésion, dans une composition adhésive thermofusible, la composition adhésive thermofusible ne comprenant pas de copolymère d'éthylène et de vinyl acétate.

2. Utilisation selon la revendication 1, **caractérisée en ce que** le copolymère d'éthylène et d'acrylate de butyle présente un indice de fluidité à l'état fondu allant de 410 à 740 g/10 min, mesurée à une température de 190°C sous une charge de 2,16 kg, de préférence de 420 à 720 g/10 min, préférentiellement allant de 450 à 700 g/10 min.

3. Utilisation selon la revendication 1 ou 2, **caractérisée en ce que** le copolymère d'éthylène et d'acrylate de butyle comprend de 18 à 32% en poids, préférentiellement de 25 à 31 % en poids d'acrylate de butyle par rapport au poids total du copolymère.

4. Utilisation selon l'une quelconque des revendications précédentes, **caractérisée en ce que** le copolymère d'éthylène et d'acrylate de n-butyle comprend 28% en poids d'acrylate de n-butyle par rapport au poids total du copolymère et un indice de fluidité à l'état fondu allant de 450 à 740g/10 minutes.

5. Composition adhésive thermofusible **caractérisée en ce qu'**elle comprend :
- au moins une résine adhésive hydrocarbonée, différente du copolymère d'éthylène et d'acrylate de n-butyle tel que défini selon l'une des revendications 1 à 4, la résine hydrocarbonée étant de préférence présente dans une teneur allant de 40 à 60% en poids et plus préférentiellement dans une teneur allant de 45 à 55% en poids, par rapport au poids total de la composition et
- au moins un copolymère d'éthylène et d'acrylate de n-butyle tel que défini selon l'une quelconque des revendications 1 à 4, ledit copolymère d'éthylène et d'acrylate de n-butyle étant de préférence présent dans la composition adhésive thermofusible dans une teneur allant de 30 à 40% en poids, de préférence dans une teneur allant de 32 à 37% en poids, par rapport au poids total de la composition
- optionnellement au moins une cire, de préférence choisie dans le groupe constitué par les cires de paraffine, les cires de paraffine microcristalline, les cires de Fischer-Tropsch, les cires Fischer-Tropsch oxydées, les cires hydrogénées de stéaramide,
et **caractérisée en ce qu'**elle ne comprend pas de copolymère d'éthylène et de vinyl acétate.

6. Composition selon la revendication 5, **caractérisée en ce que** la résine adhésive hydrocarbonée est hydrogénée.

7. Composition selon la revendication 6, **caractérisée en ce que** la résine adhésive hydrocarbonée hydrogénée est choisie dans le groupe constitué par les résines hydrocarbonées hydrogénées aliphatiques, les résines hydrocarbonées hydrogénées cycloaliphatiques, les résines hydrocarbonées aromatiques, partiellement ou totalement, hydrogénées, les résines hydrocarbonées hydrogénées aliphatiques et/ou cycloaliphatiques modifiées aromatiques, les résines hydrocarbonées hydrogénées aromatiques modifiées aliphatiques ou cycloaliphatiques et leurs mélanges, en particulier est choisie dans le groupe constitué par les résines hydrocarbonées hydrogénées cycloaliphatiques, les résines hydrocarbonées hydrogénées aliphatiques et cycloaliphatiques, les résines hydrocarbonées hydrogénées aromatiques modifiées aliphatiques et leurs mélanges.

8. Composition selon l'une quelconque des revendications 5 à 7, **caractérisée en ce qu'**elle présente une viscosité allant de 300 à 1500 mPa.s, de préférence allant de 700 à 1200 mPa.s, mesurée à une température de 170°C.

9. Utilisation de la composition telle que définie selon l'une quelconque des revendications 5 à 8, pour la préparation d'un article manufacturé.

10. Utilisation selon la revendication 9, pour la préparation d'un emballage, en particulier un emballage en carton ou en plastique, la préparation d'une reliure, d'un étiquetage ou d'une bande de chant.

11. Article manufacturé comprenant une composition adhésive thermofusible telle que définie selon l'une quelconque des revendications 5 à 8.

12. Procédé pour lier un substrat à un substrat similaire ou différent, comprenant l' application à au moins un substrat d'une composition adhésive thermo fusible, telle que définie selon l'une quelconque des revendications 5 à 8, à l'état fondu.

## Patentansprüche

1. Verwendung mindestens eines Ethylen-n-Butylacrylat-Copolymers mit einem Schmelzflussindex in geschmolzenem Zustand von strikt über 400 und strikt unter 750 g/10 Minuten, gemessen bei einer Temperatur von 190 °C unter einer Last von 2,16 kg und mit einem Gehalt an n-Butylacrylat von über oder gleich 18 Gew.-% und strikt unter 33 Gew.-%, berechnet in Bezug auf das Gesamtgewicht des Copolymers, als Kohäsionsmittel in einer heißschmelzbaren Klebstoffzusammensetzung, wobei die heißschmelzbare Klebstoffzusammensetzung kein Ethylen-Vinylacetat-Copolymer umfasst.

2. Verwendung nach Anspruch 1, **dadurch gekennzeichnet, dass** das Ethylen-Butylacrylat-Copolymer einen Schmelzflussindex in geschmolzenem Zustand von 410 bis 740 g/10 min, gemessen bei einer Temperatur von 190 °C unter einer Last von 2,16 kg, vorzugsweise von 420 bis 720 g/10 min, bevorzugt von 450 bis 700 g/10 min, aufweist.

3. Verwendung nach Anspruch 1 oder 2, **dadurch gekennzeichnet, dass** das Ethylen-Butylacrylat-Copolymer 18 bis 32 Gew.-%, vorzugsweise 25 bis 31 Gew.-% Butylacrylat, bezogen auf das Gesamtgewicht des Copolymers, umfasst.

4. Verwendung nach einem der vorhergehenden Ansprüche, **dadurch gekennzeichnet, dass** das Ethylen-n-Butylacrylat-Copolymer 28 Gew.-% n-Butylacrylat, bezogen auf das Gesamtgewicht des Copolymers, und einen Schmelzindex in geschmolzenem Zustand von 450 bis 740 g/10 Minuten umfasst.

5. Heißschmelzbare Klebstoffzusammensetzung, **dadurch gekennzeichnet, dass** sie umfasst:
- mindestens ein Kohlenwasserstoff-Klebstoffharz, das sich von dem Ethylen-n-Butylacrylat-Copolymer nach einem der Ansprüche 1 bis 4 unterscheidet, wobei das Kohlenwasserstoff-Harz vorzugsweise in einem Gehalt von 40 bis 60 Gew.-% und bevorzugt in einem Gehalt von 45 bis 55 Gew.-%, bezogen auf das Gesamtgewicht der Zusammensetzung, vorhanden ist, und
- mindestens ein Ethylen-n-Butylacrylat-Copolymer nach einem der Ansprüche 1 bis 4, wobei das Ethylen-n-Butylacrylat-Copolymer vorzugsweise in der heißschmelzbaren Klebstoffzusammensetzung in einem Gehalt von 30 bis 40 Gew.-%, vorzugsweise in einem Gehalt von 32 bis 37 Gew.-%, bezogen auf das Gesamtgewicht der Zusammensetzung, vorhanden ist,
- optional mindestens ein Wachs, das vorzugsweise aus der Gruppe ausgewählt ist, die aus dem Paraffinwachsen, den mikrokristallinen Paraffinwachsen, den Fischer-Tropsch-Wachsen, den oxidierten Fischer-Tropsch-Wachsen, den hydrierten Stearamidwachsen besteht,
und **dadurch gekennzeichnet, dass** sie kein Ethylen-Vinylacetat-Copolymer umfasst.

6. Zusammensetzung nach Anspruch 5, **dadurch gekennzeichnet, dass** das Kohlenwasserstoff-Klebstoffharz hydriert ist.

7. Zusammensetzung nach Anspruch 6, **dadurch gekennzeichnet, dass** das hydrierte Kohlenwasserstoff-Klebstoffharz aus der Gruppe ausgewählt ist, die aus den aliphatischen hydrierten Kohlenwasserstoffharzen, den cycloaliphatischen hydrierten Kohlenwasserstoffharzen, den teilweise oder vollständig hydrierten aromatischen Kohlenwasserstoffharzen, den aromatischen modifizierten aliphatischen und/oder cycloaliphatischen hydrierten Kohlenwasserstoffharzen, den aliphatischen oder cycloaliphatischen modifizierten aromatischen hydrierten Kohlenwasserstoffharzen und deren Gemischen besteht, insbesondere aus der Gruppe ausgewählt ist, die aus den cycloaliphatischen hydrierten Kohlenwasserstoffharzen, den aliphatischen und cycloaliphatischen hydrierten Kohlenwasserstoffharzen, den aliphatischen modifizierten aromatischen hydrierten Kohlenwasserstoffharzen und deren Gemischen besteht.

8. Zusammensetzung nach einem der Ansprüche 5 bis 7, **dadurch gekennzeichnet, dass** sie eine Viskosität von 300 bis 1500 mPa.s, vorzugsweise von 700 bis 1200 mPa.s, gemessen bei einer Temperatur von 170 °C, aufweist.

9. Verwendung der Zusammensetzung nach einem der Ansprüche 5 bis 8 zur Herstellung eines Manufakturartikels.

10. Verwendung nach Anspruch 9 zur Herstellung einer Verpackung, insbesondere einer Verpackung aus Karton oder aus Kunststoff, zur Herstellung eines Einbands, einer Etikettierung oder eines Kantenbands.

11. Manufakturartikel, umfassend eine heißschmelzbare Klebstoffzusammensetzung nach einem der Ansprüche 5 bis 8.

12. Verfahren zum Verbinden eines Substrats mit einem ähnlichen oder unterschiedlichen Substrat, umfassend das Auftragen auf mindestens ein Substrat einer heißschmelzbaren Klebstoffzusammensetzung nach einem der Ansprüche 5 bis 8 in geschmolzenem Zustand.

## Claims

1. Use of at least one copolymer of ethylene and n-butyl acrylate having a melt flow index in the molten state strictly higher than 400 and strictly lower than 750 g/10 minutes, measured at a temperature of 190 °C under a load of 2.16 kg, and having a content higher than or equal to 18 weight % and strictly lower than 33 weight % of n-butyl acrylate, calculated relative to the total weight of the copolymer, as cohesive agent in a hot melt adhesive composition, the hot melt adhesive composition not comprising a copolymer of ethylene and vinyl acetate.

2. The use according to claim 1, **characterized in that** the copolymer of ethylene and butyl acrylate has a melt flow index in the molten state ranging from 410 to 740 g/10 min, measured at a temperature of 190 °C under a load of 2.16 kg, preferably from 420 to 720 g/10 min, more preferably ranging from 450 to 700 g/10 min.

3. The use according to claim 1 or 2, **characterized in that** the copolymer of ethylene and butyl acrylate comprises from 18 to 32 weight %, preferably from 25 to 31 weight % of butyl acrylate, relative to the total weight of the copolymer.

4. The use according to any of the preceding claims, **characterized in that** the copolymer of ethylene and n-butyl acrylate comprises 28 weight % of n-butyl acrylate relative to the total weight of the copolymer and has a melt flow index in the molten state ranging from 450 to 740 g/10 minutes.

5. A hot melt adhesive composition **characterized in that** it comprises:
- at least one hydrocarbon adhesive resin differing from the copolymer of ethylene and n-butyl acrylate as defined in one of claims 1 to 4, the hydrocarbon resin preferably being included in a content ranging from 40 to 60 weight %, and more preferably in a content ranging from 45 to 55 weight %, relative to the total weight of the composition, and
- at least one copolymer of ethylene and n-butyl acrylate as defined in any of claims 1 to 4, said copolymer of ethylene and n-butyl acrylate preferably being included in the hot melt adhesive composition in a content ranging from 30 to 40 weight %, more preferably in a content ranging from 32 to 37 weight %, relative to the total weight of the composition,
- optionally at least one wax, preferably chosen from group formed by paraffin waxes, microcrystalline paraffin waxes, Fischer-Tropsch waxes, oxidized Fischer-Tropsch waxes, hydrogenated stearamide waxes
and **characterized in that** it does not comprise a copolymer of ethylene and vinyl acetate.

6. The composition according to claim 5, **characterised in that** the hydrocarbon adhesive resin is hydrogenated.

7. The composition according to claim 6, **characterized in that** the hydrogenated hydrocarbon adhesive resin is chosen from the group formed by hydrogenated aliphatic hydrocarbon resins, hydrogenated cycloaliphatic hydrocarbon resins, partially or fully hydrogenated aromatic hydrocarbon resins, hydrogenated aromatic modified aliphatic and/or cycloaliphatic hydrocarbon resins, hydrogenated aliphatic and/or cycloaliphatic modified aromatic hydrocarbon resins, and mixtures thereof chosen in particular from the group formed by hydrogenated cycloaliphatic hydrocarbon resins, hydrogenated aliphatic and cycloaliphatic hydrocarbon resins, hydrogenated aliphatic modified aromatic hydrocarbon resins, and mixtures thereof.

8. The composition according to any of claims 5 to 7, **characterized in that** it has viscosity ranging from 300 to 1500 mPa.s, preferably ranging from 700 to 1200 mPa.s, measured at a temperature of 170 °C.

9. Use of the composition as defined in any of claims 5 to 8, for the preparation of an article of manufacture.

10. The use according to claim 9 for the preparation of packaging, in particular cardboard or plastic packaging, the preparation of a book binding, of labelling or an edging strip.

11. An article of manufacture comprising a hot melt adhesive composition as defined in any of claims 5 to 8.

12. A method for bonding a substrate to a similar or different substrate, comprising the application to at least one substrate of a hot melt adhesive composition as defined in any of claims 5 to 8, in the molten state.
